**Europäisches Patentamt**

**European Patent Office**

**Office européen des brevets**

(19)

(11) Veröffentlichungsnummer : **0 349 733 B1**

(12) ## EUROPÄISCHE PATENTSCHRIFT

(45) Veröffentlichungstag der Patentschrift :
**12.08.92 Patentblatt 92/33**

(51) Int. Cl.[5] : **B23K 35/30**

(21) Anmeldenummer : **89108463.4**

(22) Anmeldetag : **11.05.89**

(54) **Verwendung einer Silberlegierung als Lot zum direkten Verbinden von Keramikteilen.**

(30) Priorität : **07.07.88 DE 3822966**

(43) Veröffentlichungstag der Anmeldung :
**10.01.90 Patentblatt 90/02**

(45) Bekanntmachung des Hinweises auf die
Patenterteilung :
**12.08.92 Patentblatt 92/33**

(84) Benannte Vertragsstaaten :
**AT BE CH DE ES FR GB GR IT LI LU NL SE**

(56) Entgegenhaltungen :
GB-A- 2 066 291
CHEMICAL ABSTRACTS, Band 107, Nr. 6, 10.
August 1987, Columbus, Ohio, USA KASHI-
WAGI et al. "Brazes for joining ceramics toceramics or metals" Seite 333, Spalte 1,
Zusammenfassung-Nr. 45 086b

(56) Entgegenhaltungen :
CHEMICAL ABSTRACTS, Band 105, Nr. 16, 20.
Oktober 1986, Columbus, Ohio, USA KASHI-
WAGI et al. "Braze for metals and/orcera-
mics" Seite 280, Spalte 1,
Zusammenfassung-Nr. 138 341e
CHEMCIAL ABSTRACTS, Band 108, Nr. 18, 2.
Mai 1988, Columbus, Ohio, USA MIYAZAWA et
al. "Copper -silver-tin-titanium alloybraze for
joining of ceramics" Seite 291, Spalte 1, Zu-
sammenfassung-Nr. 154 983h
CHEMICAL ABSTRACTS, Band 105, Nr. 18, 3.
November 1986, Columbus, Ohio, USA KASHI-
WAGI et al. "Composite brazes" Seite
288,Spalte 1, Zusammenfassung-Nr. 157 523g

(73) Patentinhaber : **Degussa Aktiengesellschaft
Weissfrauenstrasse 9
W-6000 Frankfurt am Main 1 (DE)**

(72) Erfinder : **Malikowski, Willi
Brentanoplatz 11
W-8750 Aschaffenburg (DE)**
Erfinder : **Weise, Wolfgang, Dr. Dipl.-Ing.
Merianstrasse 40
W-6000 Frankfurt/M 1 (DE)**

EP 0 349 733 B1

## Beschreibung

Die Erfindung betrifft die Verwendung einer Silberlegierung als Lot zum direkten Verbinden von Keramikteilen miteinander oder von Keramikteilen mit Metallteilen.

Durch den Einsatz von keramischen Werkstoffen oder Kombinationen von Keramik und Metall können Bauteile gefertigt werden, die die Vorteile der Keramik mit denen von Metallen verbinden. Der Einsatz solcher Bauteile ist jedoch zum großen Teil vom Vorhandensein geeigneter Verbindungsverfahren abhängig.

Zum Verbinden von Keramik mit Keramik oder von Keramik mit Metall wird in der Technik hauptsächlich das Löten von metallisierter Keramik angewendet. Dazu wird auf die zu lötende Stelle auf der Keramik eine Mangan-Molybdän-Suspensionsschicht aufgebracht und bei hohen Temperaturen unter Wasserstoffatmosphäre eingebrannt. Die an der Grenzschicht entstehenden Oxide führen zu einer Spinellbildung mit der Keramik und bewirken damit eine gute Haftung. Zur Verbesserung der Benetzungseigenschaften des Lotes wird normalerweise noch eine Nickelschicht aufgebracht. Die auf diese Weise metallisierte Keramik kann mit konventionellen Hartloten gelötet werden, wie beispielsweise mit Silber-Kupfer-Hartloten. Dieses Verfahren ist wegen der vielen Verfahrensschritte jedoch sehr aufwendig.

Eine wirtschaftlichere Verbindungstechnik für Keramik mit Metall stellt das Aktivlöten dar. Durch die Verwendung sogenannter Aktivlote können Keramik- und Metallteile in einem Arbeitsgang ohne vorherige Metallisierung der Keramik miteinander verbunden werden. Als Aktivlote verwendet man hauptsächlich Silber- oder Silber-Kupferlegierungen mit geringen Anteilen von Titan oder Zirkonium. Die Titangehalte liegen normalerweise zwischen 0,5 und 5 Gew %. Diese Lote sind bei niedrigen Titangehalten duktil und lassen sich leicht zu Lotformteilen verarbeiten. Mit zunehmendem Titangehalt tritt allerdings eine erhebliche Verschlechterung der Verformbarkeiten ein.

Bekannt sind binäre Silber-Titanlegierungen mit beispielsweise 1 % Titan (FR-PS 1174074). Mit solchen Loten lassen sich bei einer Kombination Zirkonoxid/Stahl CK 45 Scherfestigkeitswerte von 130 bis 150 MPa erzielen. Sie haben jedoch den Nachteil einer relativ hohen Solidustemperatur und damit auch Löttemperatur. Durch Zusatz von Kupfer läßt sich die Solidustemperatur senken, sodaß für Aktivlötungen von Keramik hauptsächlich Silber-Kupfer-Titan-Lote verwendet werden, mit beispielsweise 3 % Titan und einem Silber-Kupfer-Eutektikum (z.B. Metall 27 (1973), 259-265). Diese Lote besitzen allerdings eine geringere Duktilität als die Silber-Titanlote. Bekannt sind auch Lotlegierungen mit 60 bis 65 % Silber, 24 bis 25 % Kupfer, 5 bis 10 % Indium und etwa 5 % Titan (FR-PS 1174330). Diese Lote haben jedoch den Nachteil, daß der Indiumzusatz zu einer Versprödung der Legierungen führt.

Es war daher Aufgabe der vorliegenden Erfindung, eine Silber-Legierung als Lot zum direkten Verbinden von Keramikteilen miteinander oder von Keramikteilen mit Metallteilen zu finden, die eine hohe Duktilität besitzen und eine hohe Festigkeit der Lötverbindungen und gleichzeitig eine niedrige Löttemperatur aufweisen.

Diese Aufgabe wird erfindungsgemäß durch die Verwendung einer Legierung aus 70 bis 99 Gew % Silber, 0,5 bis 10 Gew.% Zinn oder 0,5 bis 15 Gew.% Indium und 0,5 bis 15 Gew.% Titan und/oder Zirkonium gelöst.

Vorzugsweise verwendet man Legierungen aus 92 bis 99 Gew % Silber, 0,5 bis 4 Gew % Indium und 0,5 bis 4 Gew % Titan oder 92 bis 99 Gew % Silber, 0,5 bis 10 Gew % Zinn und 0,5 bis 4 Gew % Titan.

Überraschenderweise hat es sich gezeigt, daß Indium bis zu Gehalten von 15 Gew.% und Zinn bis zu Gehalten von 10 Gew.% zu Silber-Titanlegierungen zugesetzt werden können, ohne daß sich die Duktilität dieser Legierungen wesentlich verschlechtert. Es bilden sich im Gegensatz zu kupferhaltigen Silber-Indium-Titan-Legierungen keine spröden Phasen, so daß auch bei Titangehalten bis zu 15 Gew % die Legierungen eine gute Verformbarkeit behalten. Diese Legierungen können durch Kaltwalzen mit entsprechenden Zwischenglühungen zu Lotfolien verarbeitet werden. Neben der hohen Duktilität zeigen diese Lote sehr hohe Festigkeitswerte an den Keramik-Metall-Verbindungen und relativ niedrige Arbeitstemperaturen.

Folgende Legierungen wurden mit gutem Erfolg zum Löten von Keramikteilen eingesetzt:

| Legierungszusammen-<br>setzung | Arbeits-<br>temperatur | Festigkeit<br>der Verbindung |
|---|---|---|
| Ag TiIn - 95/4/1 | $1000^\circ$ C | 140 - 165 MPa |
| Ag TiIn - 94/4/2 | $1000^\circ$ C | 140 - 160 MPa |
| Ag TiSn - 95/4/1 | $1000^\circ$ C | 124 - 138 MPa |
| Ag InTi - 85/10/5 | $960^\circ$ C | 105 - 110 MPa |
| Ag InTi - 75/10/15 | $960^\circ$ C | 100 - 106 MPa |
| Ag InTi - 70/15/15 | $950\ ^\circ$C | 106 - 112 MPa |

Alle Legierungen zeigten eine gute Duktilität und Verarbeitbarkeit.

**Patentansprüche**

1. Verwendung einer Silberlegierung aus 70 bis 99 Gew % Silber, 0,5 bis 15 Gew % Indium oder 0,5 bis 10 Gew.% Zinn und 0,5 bis 15 Gew % Titan und/oder Zirkonium als Lot zum direkten Verbinden von Keramikteilen miteinander oder von Keramikteilen mit Metallteilen.

2. Verwendung einer Silberlegierung aus 92 bis 99 Gew % Silber, 0,5 bis 4 Gew % Indium und 0,5 bis 4 Gew % Titan gemäß Anspruch 1.

3. Verwendung einer Silberlegierung aus 92 bis 99 Gew % Silber, 0,5 bis 4 Gew % Zinn und 0,5 bis 4 Gew % Titan gemäß Anspruch 1.

**Claims**

1. Use of a silver alloy of from 70 to 99% by weight of silver, from 0.5 to 15% by weight of indium or from 0.5 to 10% by weight of tin and from 0.5 to 15% by weight of titanium and/or zirconium as solder for the direct connection of ceramic parts to one another or of ceramic parts to metal parts.

2. Use of a silver alloy of from 92 to 99% by weight of silver, from 0.5 to 4% by weight of indium and from 0.5 to 4% by weight of titanium according to Claim 1.

3. Use of a silver alloy of from 92 to 99% by weight of silver, from 0.5 to 4% by weight of tin and from. 0.5 to 4% by weight of titanium according to Claim 1.

**Revendications**

1. Utilisation d'un alliage d'argent composé de 70 à 99 % en poids d'argent, de 0,5 à 15 % en poids d'indium ou de 0,5 à 10 % en poids d'étain et de 0,5 à 15 % en poids de titane et/ou de zirconium, en tant que brasage pour l'assemblage direct de pièces céramiques entre elles ou de pièces céramiques avec des pièces métalliques.

2. Utilisation d'un alliage d'argent composé de 92 à 99 % en poids d'argent, de 0,5 à 4 % en poids d'indium et de 0,5 à 4 % en poids de titane, selon la revendication 1.

3. Utilisation d'un alliage d'argent composé de 92 à 99 % en poids d'argent, de 0,5 à 4 % en poids d'étain et de 0,5 à 4 % en poids de titane, selon la revendication 1.